# EUROPEAN PATENT APPLICATION

(11) **EP 4 768 105 A1**
(43) Date of publication of application: **01.07.2026**
(21) Application number: 24868186.8
(22) Date of filing: 11.09.2024
(51) Int. Cl.: A63F 13/24, G06F 3/02

(54) **INPUT DEVICE**

(30) Priority: 21.09.2023 JP 2023156247
(71) Applicant: Sony Interactive Entertainment Inc., Tokyo 108-0075 (JP)
(72) Inventor: MINAMI, Tatsuya, Tokyo 108-0075 (JP); MORITA, Masaho, Tokyo 108-0075 (JP); SUZUKI, Kazuyuki, Tokyo 108-0075 (JP); AOYANAGI, Yoshihiro, Tokyo 108-0075 (JP)
(74) Representative: Fish & Richardson P.C.
(86) International application number: PCT/JP2024/032542
(87) International publication number: WO 2025/063109

(57) **Abstract**

An object of the present disclosure is to bias an operated member toward an initial position without using an elastic member. An input device (1) includes a first magnetic member (30) and a second magnetic material (40) that are accommodated in a housing (1) and formed of a magnetic material. The first magnetic member (30) attaches a down button (20) to the input device (1) by a magnetic force between the first magnetic member (30) and an attached portion (22) formed of a magnetic material in the down button (20). The down button (20), in a state of being attached to the input device (1), is movable from an initial position together with the first magnetic member (30) in response to an operation of a user and detachable from the input device (1) by an operation from outside the housing (10). The second magnetic member (40) biases the down button (20) toward the initial position by attracting the first magnetic member (30).

## Description

### Technical Field

The present disclosure relates to an input device.

### Background Art

PTL 1 described below discloses an input device utilized for game operations and the like. The input device can communicate with an information processing device in a wired or wireless manner. The input device detects an operation of a user on an operated member by using a sensor and transmits a signal corresponding to the operation to the information processing device. Further, the operated member is attached to the input device by a magnetic force of a magnet and is detachable from the input device by an operation by the user.

### Citation List

### Patent Literature

PTL 1: WO 2023/127662

### Summary

### Technical Problem

A typical operated member such as an operation button is biased toward an initial position by using an elastic member such as a spring. A space for securing the elastic force of this elastic member (spring length, for example) needs to be provided inside the input device.

An object of the present disclosure is to bias an operated member toward an initial position without using an elastic member.

### Solution to Problem

An input device according to the present disclosure may include a housing, an operated member including an operated portion exposed from the housing and a magnetic portion formed of a magnetic material and accommodated in the housing, a first magnetic member accommodated in the housing, formed of a magnetic material, and configured to attach the operated member to the input device by a magnetic force between the first magnetic member and the magnetic portion, and a second magnetic member accommodated in the housing and formed of a magnetic material. The operated member, in a state of being attached to the input device, may be movable from an initial position together with the first magnetic member in response to an operation by a user and detachable from the input device by an operation from outside the housing. The second magnetic member may bias the operated member toward the initial position by attracting the first magnetic member. According to this configuration, it is possible to bias the operated member toward the initial position without using an elastic member.

### Brief Description of Drawings

[Fig. 1A] Fig. 1A is a plan view of an input device according to an example of an embodiment of the present disclosure.
[Fig. 1B] Fig. 1B is a bottom view of the input device.
[Fig. 2] Fig. 2 is a perspective view illustrating a lower side of the input device.
[Fig. 3] Fig. 3 is an exploded perspective view illustrating a portion of constituent elements of the input device built into a housing
[Fig. 4] Fig. 4 is a bottom view of a frame with down buttons attached thereto.
[Fig. 5] Fig. 5 is an exploded perspective view illustrating constituent elements of a support structure of the down button.
[Fig. 6A] Fig. 6A is a cross-sectional view taken along line VI-VI in Fig. 4.
[Fig. 6B] Fig. 6B is a diagram illustrating movement when a user presses the down button in the cross-sectional view of Fig. 6A.
[Fig. 7] Fig. 7 is a diagram illustrating movement when the user detaches the down button in the cross-sectional view of Fig. 6A.
[Fig. 8] Fig. 8 is a cross-sectional view taken along line VIII-VIII in Fig. 4.

### Description of Embodiments

Hereinafter, an input device 1, which is an example of an input device proposed in the present disclosure, will be described with reference to the drawings. The input device 1 can be utilized as, for example, an input device for an information processing device (game device or video playback device, for example) having a function of executing an application (game application, for example). The input device 1 can communicate with the information processing device in a wired or wireless manner and transmits, to the information processing device, a signal corresponding to an operation performed by a user on the input device 1.

### 1. Overview of Input Device

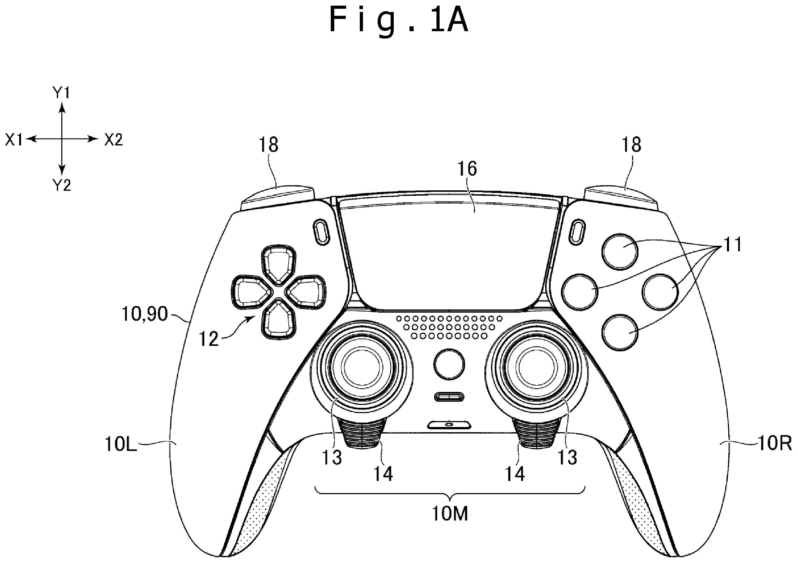

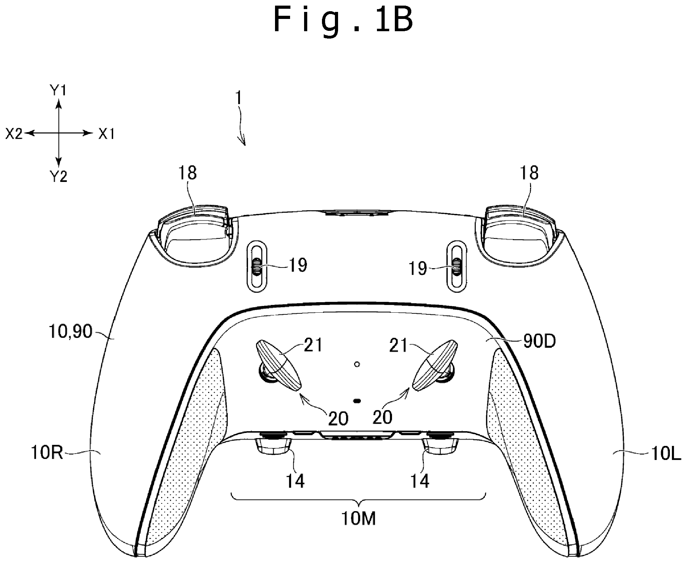

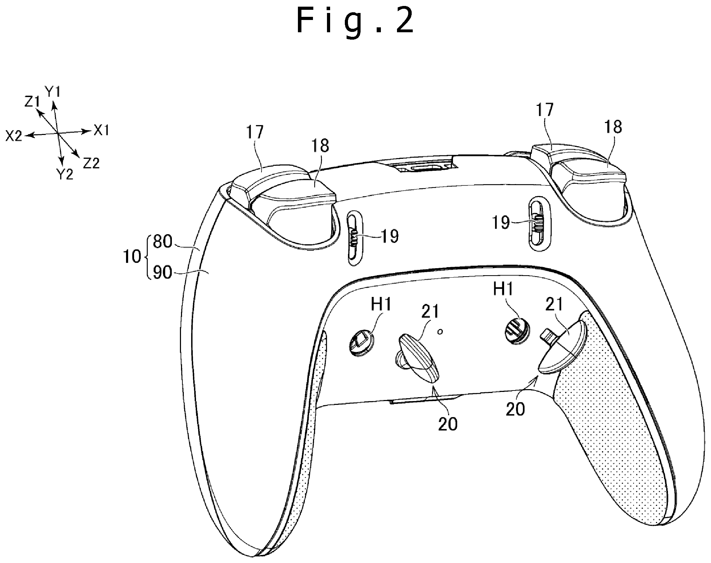

Fig. 1A is a plan view of the input device 1 according to an example of an embodiment of the present disclosure. Fig. 1B is a bottom view of the input device 1. Fig. 2 is a perspective view illustrating a lower side of the input device 1. In the following description, an X1 direction and an X2 direction of an X axis (direction in which left and right grips 10L and 10R described below are aligned) illustrated in Fig. 1A and the like are defined as a leftward direction and a rightward direction, respectively. Further, a Y1 direction and a Y2 direction of a Y axis perpendicular to the X axis are defined as frontward and rearward, respectively. Further, a Z1 direction and a Z2 direction of a Z axis perpendicular to the X axis and the Y axis illustrated in Fig. 2 and the like are defined as upward and downward, respectively. However, these directions and arranged positions are defined to describe shapes and relative positional relationships of elements (parts, members, and portions) of the input device 1, and do not limit a posture of the input device 1.

As illustrated in Fig. 1A, the input device 1 may include a housing 10 that is a main body of the input device 1 and forms an outer surface of the input device 1. As illustrated in Fig. 1A, the input device 1 may include the left grip 10L extending rearward on the left side of the housing 10 and the right grip 10R extending rearward on the right side of the housing 10. Further, the input device 1 may include a central portion 10M disposed between the left grip 10L and the right grip 10R in the housing 10. The left grip 10L and the right grip 10R may extend rearward of a rear edge of the central portion 10M.

As illustrated in Fig. 2, the housing 10 may be formed by combining an upper housing 80 and a lower housing 90. Further, as illustrated in Fig. 1A, the input device 1 may include four operation buttons 11, direction keys 12, an operation pad 16, and the like on an upper side of the housing 10. The operation buttons 11, the direction keys 12, and the operation pad 16 may be provided on the upper housing 80. Further, the input device 1 may include operation sticks 13 protruding upward from the housing 10 (upper housing 80, more specifically) and function buttons 14 protruding rearward from the housing 10.

As illustrated in Fig. 1B, a down button 20, which is an operated member operated by the user, may be disposed on a lower surface 90D provided on the lower housing 90 in the central portion 10M of the housing 10. As illustrated in Fig. 2, two holes H1 are provided in the lower surface 90D. Two of the down buttons 20 are attached to the two holes H1. Note that the input device 1 may include an operated member (operation button 17, trigger button 18, or slide switch 19 illustrated in Fig. 2, for example) different from the down button 20.

The down button 20 may include an operated portion 21 exposed from the housing 10 and pressed by the user. The operated portion 21 may include an operated surface touched by a finger (middle finger, for example) of the user. The operated portion 21 of the down button 20 attached to the hole H1 on the right side (hole H1 on the left side in Fig. 2) may include an operated surface oriented diagonally frontward in a leftward direction. Further, the operated portion 21 of the down button 20 attached to the hole H1 on the left side (hole H1 on the right side in Fig. 2) may include an operated surface oriented diagonally frontward in a rightward direction. Accordingly, the down button 20 on the right side can be pressed down diagonally rearward in the rightward direction, and the down button 20 on the left side can be pressed down diagonally rearward in the leftward direction. The user can press down the down button 20 on the right side with a finger of the right hand in a direction of the right grip 10R while gripping the right grip 10R. Further, the user can press down the down button 20 on the left side with a finger of the left hand in a direction of the left grip 10L while gripping the left grip 10L.

As described below, the down button 20 is attached to the hole H1 by a magnetic force. The user can detach the down button 20 attached to the housing 10 without using a tool or the like. With this configuration, the user can select, as desired, whether to attach the down button 20 to the input device 1 in accordance with the type of application (game application, for example) executed by the information processing device.

### 2. Support Structure of Down Button

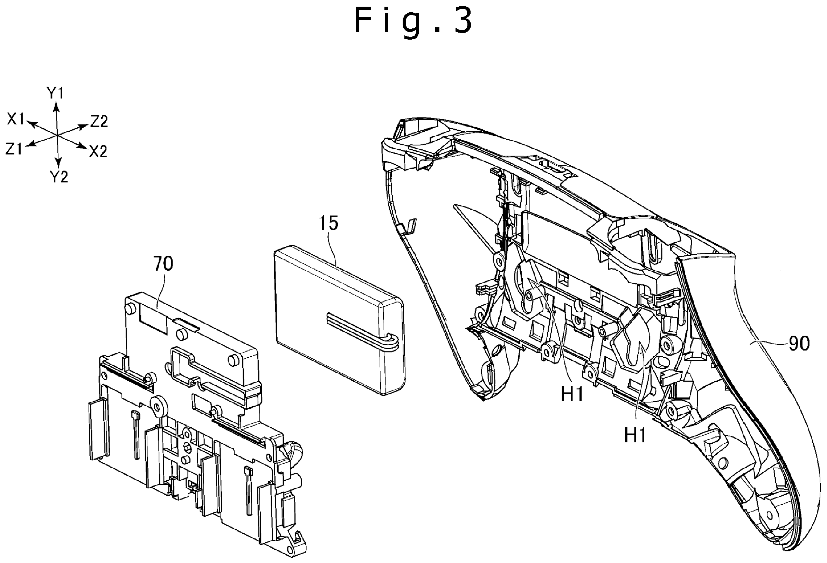

Hereinafter, a support structure of the down button 20 inside the housing 10 will be described. Fig. 3 is an exploded perspective view illustrating a portion of the constituent elements of the input device 1 built into the housing 10. As illustrated in Fig. 3, the input device 1 may include a frame 70. The frame 70 may be fixed to the housing 10 (lower housing 90 and/or upper housing 80, for example) by a fixing tool such as a screw. Note that Fig. 3 illustrates an upper side of the frame 70.

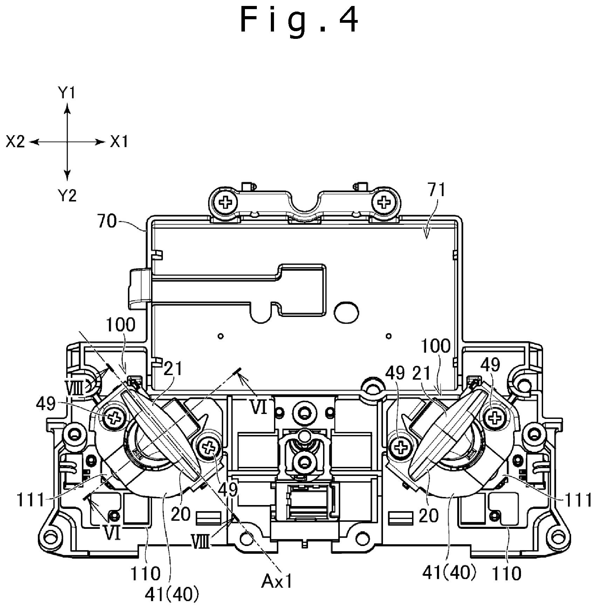

As illustrated in Fig. 3, the input device 1 may include a battery 15. The battery 15 may be disposed between the frame 70 and the lower housing 90. The frame 70 may include a housing recessed portion 71 (refer to Fig. 4) that accommodates the battery 15. Further, a support structure 100 of the down buttons 20 described below may be attached to the frame 70.

Fig. 4 is a bottom view of the frame 70 with the down buttons 20 attached thereto. As illustrated in Fig. 4, the two down buttons 20 can be attached to a lower side of the frame 70. The frame 70 may be provided with the support structure 100 that supports the down buttons 20 with the down buttons 20 attached thereto.

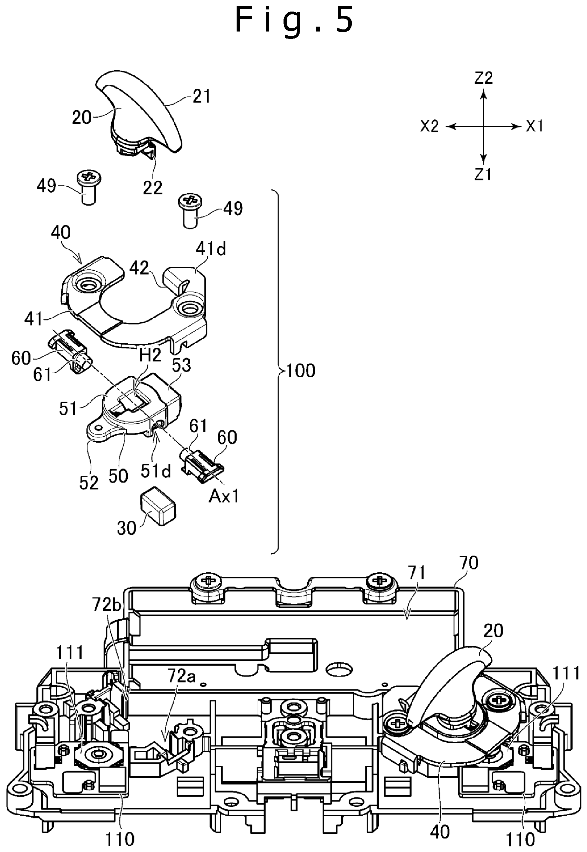

Fig. 5 is an exploded perspective view illustrating constituent elements of the support structure 100 of the down button 20. As illustrated in Fig. 5, the input device 1 may include, as the support structure 100, a first magnetic member 30 formed of a magnetic material, a second magnetic member 40 formed of a magnetic material, a support member 50 that supports the down button 20 with the down button 20 as the operated member attached thereto, and two shaft members 60 attached to the support member 50. These members may be accommodated in the housing 10 that is the housing.

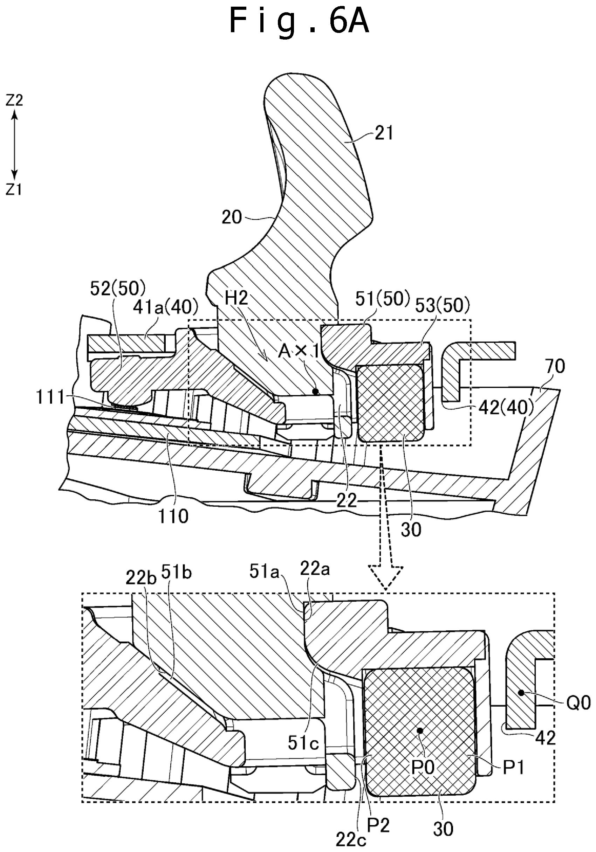

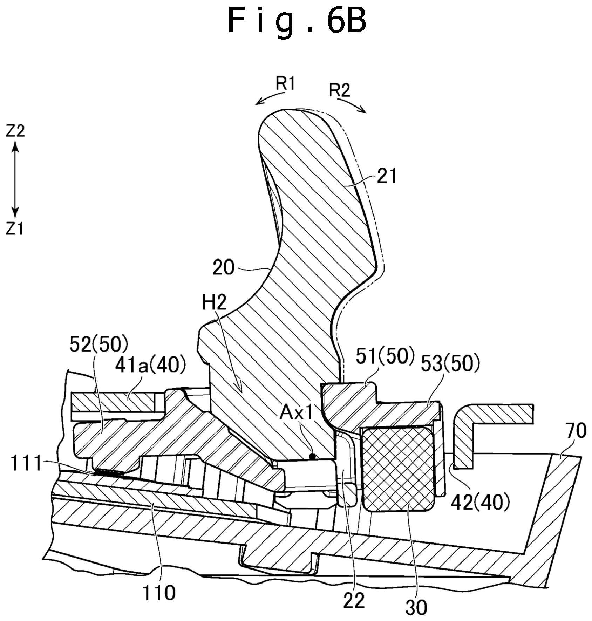

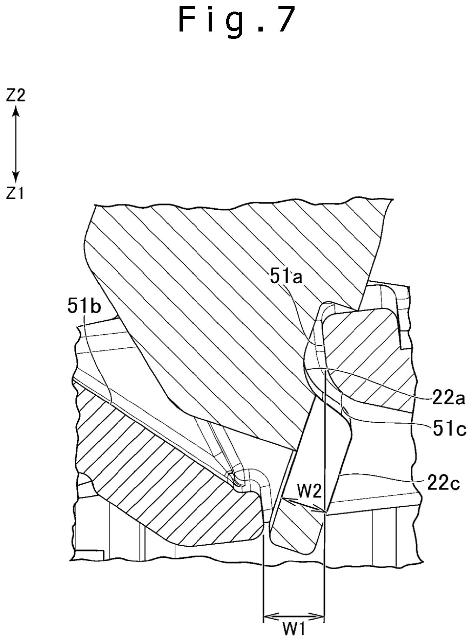

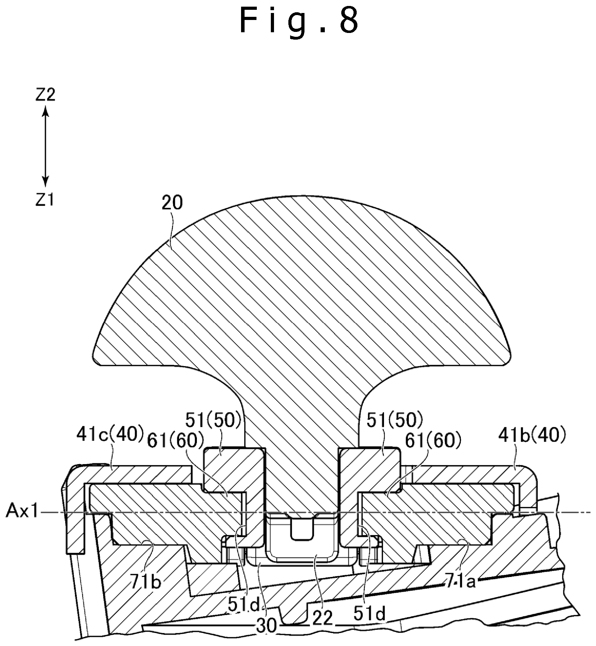

Fig. 6A is a cross-sectional view taken along line VI-VI in Fig. 4. Fig. 6B is a diagram illustrating movement when the user presses the down button 20 in an operation direction in the cross-sectional view of Fig. 6A. Fig. 7 is a diagram illustrating movement when the user detaches the down button 20 in the cross-sectional view of Fig. 6A. Fig. 8 is a cross-sectional view taken along line VIII-VIII in Fig. 4.

As illustrated in Fig. 5 and Fig. 6A, the down button 20 can be attached to the support member 50. The support member 50 may be attached to the frame 70 by the second magnetic member 40. The support member 50 is movable about an axis Ax1 (refer to Fig. 4, Fig. 5, and Fig. 8; position of axis Ax1 coincides with position of line VIII-VIII in Fig. 4) defined by the two shaft members 60 (refer to Fig. 5) attached to the support member 50. The support member 50 may be formed of metal. This makes it possible to secure rigidity of the support member 50.

As illustrated in Fig. 6A, the down button 20 may include an attached portion 22 accommodated in the housing 10 and attached to the support member 50 described below. The attached portion 22 may be accommodated in the frame 70 fixed inside the housing 10. The attached portion 22 may be formed of a magnetic material. The attached portion 22 may be formed of a magnetic body. This magnetic body may be a ferromagnetic body such as iron, or may be a soft magnetic body such as an iron alloy (silicon iron, for example). In the present embodiment, the attached portion 22 of the down button 20 corresponds to the "magnetic portion" of the present invention.

Note that, in the present embodiment, the down button 20 as a whole is formed of a magnetic material. The material is not limited thereto, and the down button 20 may be formed of a plurality of materials. For example, the attached portion 22 of the down button 20 accommodated in the housing 10 may be formed of a magnetic material, and other portions of the down button 20 may be formed of a material different from the magnetic material.

As illustrated in Fig. 6A, the down button 20 may be attached to the input device 1 by a magnetic force between the attached portion 22 (magnetic portion) of the down button 20 and the first magnetic member 30. The first magnetic member 30 may be formed of a magnet (hard magnetic material, for example).

As illustrated in Fig. 6A, the support member 50 may include a base portion 51 in which a hole H2 is formed. The attached portion 22 of the down button 20 may be accommodated in this hole H2. The attached portion 22 may include a recessed portion 22a on a side surface thereof (side surface on right side in Fig. 6A). An edge portion 51a of the hole H2 formed in the support member 50 may be fitted into this recessed portion 22a. Further, the attached portion 22 of the down button 20 may include an inclined surface 22b on a side surface (side surface on left side in Fig. 6A) opposite to the side surface in which the recessed portion 22a is formed. Further, an inclined surface 51b may be formed on an inner surface of the hole H2 formed in the support member 50.

As illustrated in Fig. 6A, the support member 50 may include a contact portion 52 that comes into contact with a sensor element 111 described below. The contact portion 52 is separated from the axis Ax1 toward one side (leftward direction in Fig. 6A, for example) in a first direction intersecting the axis Ax1. Further, the support member 50 may include an extending portion 53 extending from the base portion 51 to the other side in the first direction (rightward direction in Fig. 6A). The first magnetic member 30 may be attached to this extending portion 53. In this way, the first magnetic member 30 may be attached to the support member 50 away from the axis Ax1 in the first direction. More specifically, the first magnetic member 30 may be separated from the axis Ax1 toward the other side in the first direction (rightward direction in Fig. 6A). The first magnetic member 30 may be fixed to the extending portion 53 so as not to detach from the extending portion 53.

The attached portion 22 of the down button 20 may include, on the upward side (Z1 direction in Fig. 6A) of the recessed portion 22a, a facing portion 22c facing the first magnetic member 30. This facing portion 22c is attracted toward the first magnetic member 30 by the magnetic force, and thus a moment in a rotation direction R1 illustrated in Fig. 6B acts on the down button 20. Then, the inclined surface 22b of the down button 20 is pressed against the inclined surface 51b of the support member 50. Thus, the down button 20 is supported by the support member 50. Note that, in the attached portion 22, only the facing portion 22c may be formed of a magnetic material, and the other portions may be formed of a material different from the magnetic material.

The down button 20 is movable from an initial position together with the first magnetic member 30 in response to an operation by the user. The down button 20 is movable about the axis Ax1 between the initial position illustrated in Fig. 6A and a first inclined position illustrated in Fig. 6B, for example. In Fig. 6B, the initial position of the down button 20 is indicated by a two-dot chain line. The first inclined position is defined in the rotation direction R1 about the axis Ax1 relative to the initial position.

As described above, the support member 50 is movable about the axis Ax1. This makes it possible to move the down button 20 about the axis Ax1 integrally with the support member 50 supporting the down button 20.

As illustrated in Fig. 4, the axis Ax1 extends in a diagonal direction relative to a left-right direction (X-axis direction) and a front-rear direction (Y-axis direction). Accordingly, the down button 20 on the left side that is attached to the support member 50 on the left side can be pressed down toward the left grip 10L. Similarly, the down button 20 on the right side that is attached to the support member 50 on the right side can be pressed down toward the right grip 10R.

When the user moves the down button 20 in the rotation direction R1 that is the operation direction (refer to Fig. 6B) from the initial position to the first inclined position, the inclined surface 22b (refer to Fig. 6A) of the down button 20 presses the inclined surface 51b (refer to Fig. 6A) of the support member 50. This causes the down button 20 to move from the initial position toward the first inclined position together with the support member 50. As described above, when the down button 20 is in the initial position, the inclined surface 22b of the down button 20 is in contact with the inclined surface 51b of the support member 50. This makes it possible to suppress rattling of the down button 20 against the support member 50 when the user operates the down button 20.

The down button 20 may be detachable from the input device 1 by an operation from outside the housing 10 that is the housing. The down button 20 is movable to a second inclined position illustrated in Fig. 7, for example. The second inclined position is defined in a rotation direction R2 (refer Fig. 6B) that is a direction opposite to the rotation direction R1 with respect to the initial position illustrated in Fig. 6A. When the down button 20 is in the second inclined position, a distance between the facing portion 22c formed of a magnetic material and the first magnetic member 30 (refer to Fig. 6A) increases. This weakens the magnetic force attracting the facing portion 22c toward the first magnetic member 30, making it possible to easily detach the down button 20 from the support member 50 and the housing 10 (input device 1). When the user detaches the down button 20 from the input device 1, the user needs to move the down button 20 in the rotation direction R2 that is a direction opposite to the rotation direction R1 that is the normal operation direction of the down button 20. This makes it possible to suppress unintentional detachment of the down button 20 by the user.

As described above, the edge portion 51a of the hole H2 formed in the support member 50 may be fitted into the recessed portion 22a formed in the down button 20. As illustrated in Fig. 7, a width W1 of a space defined by the edge portion 51a and an end portion of the inclined surface 51b (end portion located in Z1 direction in Fig. 7) in the support member 50 is greater than a width W2 of the facing portion 22c of the down button 20. Further, in the edge portion 51a of the support member 50, a corner portion 51c that comes into contact with an edge portion of the facing portion 22c of the down button 20 is chamfered. Thus, when the down button 20 is in the second inclined position, the user can pull the down button 20 out from the hole H2 along the corner portion 51c of the support member 50.

As illustrated in Fig. 5, the second magnetic member 40 is disposed downward (Z2 direction in Fig. 5) of the support member 50. The second magnetic member 40 may be formed in a plate-like shape. The first magnetic member 30 attached to the support member 50 is movable about the axis Ax1 relative to the frame 70. In contrast, the second magnetic member 40 may be fixed to the frame 70. The second magnetic member 40 may include a fixed portion 41 fixed to the frame 70 by a fixing tool 49 such as a screw, and a facing portion 42 bent from the fixed portion 41 and facing the first magnetic member 30.

As illustrated in Fig. 6A, the second magnetic member 40 (facing portion 42, more specifically) attracts the first magnetic member 30 with a magnetic force, thereby biasing the down button 20 toward the initial position illustrated in Fig. 6A. The first magnetic member 30 is attached to the support member 50, and the down button 20 can move integrally with the support member 50 about the axis Ax1. Thus, the second magnetic member 40 attracts the first magnetic member 30 with a magnetic force, thereby biasing the down button 20 toward the initial position together with the support member 50 to which the first magnetic member 30 is attached. The second magnetic member 40 may be formed of a magnetic body. This magnetic body may be a ferromagnetic body such as iron or a soft magnetic body such as an iron alloy (silicon iron, for example).

Thus, the first magnetic member 30 is attracted by the magnetic force, making it possible to bias the down button 20 toward the initial position illustrated in Fig. 6A without using a spring. This makes it possible to suppress rattling of the down button 20 at the initial position. Further, this also makes it possible to utilize the structure for generating the magnetic force for attaching the down button 20 to the housing 10 to bias the down button 20 toward the initial position.

As illustrated in Fig. 6A, the first magnetic member 30 may be a magnet, for example, and may have a first magnetic pole P1 and a second magnetic pole P2, the first magnetic pole P1 being one of an S pole and an N pole, and the second magnetic pole P2 being the other of the S pole and the N pole. The two magnetic poles P1 and P2 respectively face in directions opposite to each other in the first direction (left-right direction in Fig. 6A) intersecting the axis Ax1. The attached portion 22 (facing portion 22c, more specifically) of the down button 20 may face the first magnetic pole P1. Further, the facing portion 42 of the second magnetic member 40 may face the second magnetic pole P2. Thus, by using a magnet as the first magnetic member 30, it is possible to form both the attached portion 22 of the down button 20 and the second magnetic member 40 by magnetic bodies (ferromagnetic bodies or soft magnetic bodies, for example). This makes it possible to reduce the number of magnets for biasing the down button 20 toward the initial position.

As described above, the first magnetic member 30 may be attached to the support member 50 away from the axis Ax1 in the first direction (left-right direction in Fig. 6A, for example) intersecting the axis Ax1. Here, the second magnetic member 40 may attract the first magnetic member 30 in a second direction (Z-axis direction, up-down direction in Fig. 6A, for example) intersecting the axis Ax1 and the first direction. As illustrated in Fig. 6A, the facing portion 42 may be shifted in the second direction relative to the first magnetic member 30. More specifically, a central position Q0 of the facing portion 42 may be shifted relative to a central position P0 of the first magnetic member 30 in the second direction. In the example illustrated in Fig. 6A, the facing portion 42 faces a lower end portion (portion located in Z2 direction) of the first magnetic member 30, and does not face an upper end portion (portion located in Z1 direction) of the first magnetic member 30. As a result, a moment acts on the first magnetic member 30 in the rotation direction R1 (refer to Fig. 6B) about the axis Ax1. Then, the support member 50 is biased together with the first magnetic member 30, and the down button 20 attached to the support member 50 is biased toward the initial position illustrated in Fig. 6A.

As illustrated in Fig. 5, a sensor substrate 110 may be attached to the frame 70. The sensor element 111 may be mounted on the sensor substrate 110. The sensor element 111 is accommodated in the housing 10 of the input device 1 together with the frame 70. The sensor element 111 may output a signal in accordance with whether the sensor element 111 is pressed by the support member 50 (contact portion 52, more specifically). The sensor element 111 is, for example, a switch that outputs an ON signal when pressed or not pressed by the support member 50. The sensor element 111 may be a pressure-sensitive sensor that outputs a signal corresponding to a pressure received from the support member 50. When the user presses the operated portion 21 in the rotation direction R1 (refer to Fig. 5B) into the first inclined position illustrated in Fig. 5B, the contact portion 52 of the support member 50 may move in the rotation direction R1 about the axis Ax1 and press the sensor element 111. Accordingly, a signal is output from the sensor element 111, and an operation of the down button 20 by the user is detected.

As illustrated in Fig. 6A, the sensor element 111 may be located on one side (in Z1 direction, lower side in Fig. 6A, for example) in the second direction (Z-axis direction, up-down direction in Fig. 6A, for example) intersecting the axis Ax1 and the first direction (left-right direction in Fig. 6A , for example) relative to the contact portion 52 of the support member 50. Then, the second magnetic member 40 may attract the first magnetic member 30 toward the other side in the second direction (Z2 direction, upward direction in Fig. 6A, for example). The sensor element 11 and the second magnetic member 40 may be positioned with the axis Ax1 interposed therebetween in the first direction (left-right direction in Fig. 6A), and may be shifted to each other in an opposite direction with respect to the support member 50 in the second direction (up-down direction in Fig. 6A). In Fig. 6A, the second magnetic member 40 is shifted upward (in Z2 direction) relative to the support member 50, and the sensor element 111 is located downward (in Z1 direction) of the support member 50. Thus, in a state without external force being applied to the down button 20 (in a state of user not operating down button 20, for example), the support member 50 is biased in the direction of the sensor element 111.

As illustrated in Fig. 6A, the contact portion 52 of the support member 50 may come into contact with the sensor element 111 in a state without external force being applied to the down button 20. With this configuration, it is possible to more effectively suppress rattling of the support member 50 and the down button 20 attached thereto at the initial position. Further, when the user presses the down button 20 from the initial position in the rotation direction R1, which is the operation direction, the contact portion 52 is in contact with the sensor element 111, allowing the contact portion 52 to immediately press the sensor element 111. Note that, desirably, the contact portion 52 comes into contact with the sensor element 111 and does not press the sensor element 111 when the down button 20 is in the initial position illustrated in Fig. 6A.

As illustrated in Fig. 5, the second magnetic member 40 may include the facing portion 42 facing the first magnetic member 30 and the fixed portion 41 bent from the facing portion 42 and fixed to the frame 70. As described above, the facing portion 42 may have a function (first function) of attracting the first magnetic member 30. The fixed portion 41 may have a function (second function) different from the function of attracting the first magnetic member 30.

As illustrated in Fig. 6A and Fig. 6B, the fixed portion 41 may include a first cover portion 41a that covers a portion of the support member 50 in the Z-axis direction. The first cover portion 41a may be located downward of the contact portion 52 formed in the support member 50 (in direction indicated by Z2 in Fig. 6A and Fig. 6B). This makes it possible to suppress downward movement of the contact portion 52 (in direction indicated by Z2) and suppress movement of the support member 50 in the rotation direction R2 about the axis Ax1. Further, by providing both the portion that covers a portion of the support member 50 and the portion that attracts the first magnetic member 30 in the second magnetic member 40, it is possible to reduce the number of members accommodated in the housing 10 as compared with that in a case of these portions being provided in different members.

As illustrated in Fig. 5 and Fig. 8, the input device 1 may include the shaft member 60 in which the axis Ax1 is defined. In the example illustrated in Fig. 8, two of the shaft members 60 are attached to the base portion 51 of the support member 50. Accordingly, the support member 50 can rotate about the axis Ax1 defined by the shaft members 60.

As illustrated in Fig. 5 and Fig. 8, the shaft member 60 may include an end portion 61 having a cylindrical shape. The support member 50 may include two recessed portions 51d having shapes corresponding to those of the end portions 61 of the shaft members 60. One recessed portion 51d may be formed on each of two side surfaces of the base portion 51 of the support member 50 that face each other. The end portions 61 of the shaft members 60 may be respectively fitted into the two recessed portions 51d. The shaft members 60 may be fixed to the frame 70. The support member 50 can rotate about the axis Ax1 defined by the shaft members 60 by sliding along outer circumferential surfaces of the end portions 61 of the two shaft members 60. Note that the end portion 61 need not be cylindrical, and may be spherical, for example.

As described above, the support member 50 may be formed of metal, whereas the shaft member 60 may be formed of resin. Thus, the shaft member 60 defining the axis Ax1 is formed of resin, making it possible to allow the shaft member 60 to bend relative to the axis Ax1 and improve endurance of the shaft member 60.

As illustrated in Fig. 5 and Fig. 8, the frame 70 may be formed with recessed portions 72a and 72b into which upper sides (Z1 sides in Fig. 8) of the two shaft members 60 are fitted. The fixed portion 41 may include a second cover portion 41b and a third cover portion 41c that cover the two shaft members 60 in the Z-axis direction. The second and third cover portions 41b and 41c may be located downward of the two shaft members 60 (in direction indicated by Z2 in Fig. 8). Thus, the fixed portion 41 including the second and third cover portions 41b and 41c is fixed to the frame 70, fixing the two shaft members 60 to the frame 70. That is, the second and third cover portions 41b and 41c cover the two shaft members 60, restricting the two shaft members 60 from movement in a direction (second direction, Z-axis direction in each drawing, for example) intersecting the axis Ax1. This makes it possible to suppress detachment of the shaft members 60 from the frame 70.

As illustrated in Fig. 4 and Fig. 5, the fixed portion 41 fixed to the frame 70 in the second magnetic member 40 may have a U-shape surrounding the base portion 51 of the support member 50 in a plan view. The fixed portion 41 may cover both the support member 50 (contact portion 52, for example) and the two shaft members 60. Thus, by covering both the support member 50 and the two shaft members 60 with one second magnetic member 40, it is possible to minimize the number of members fixed to the frame 70. Further, as illustrated in Fig. 5, the fixed portion 41 may include a bent portion 41d extending from the facing portion 42 and folded back in the direction of one of the two shaft members 60. With the bent portion 41d formed, it is possible to form the facing portion 42 that faces the first magnetic member 30 and attracts the first magnetic member 30 with a magnetic force in the second magnetic member 40.

### 3. Modifications

Note that the present invention is not limited to the embodiment described above. In the embodiment, an example is described in which the first magnetic member 30 is formed of a magnet (hard magnetic material, for example), and the attached portion 22 of the down button 20 that is accommodated in the housing 10 and the second magnetic member 40 are formed of magnetic bodies (ferromagnetic material or soft magnetic material, for example). However, formation is not limited thereto and, for example, the attached portion 22 (facing portion 22c, for example) and the second magnetic member 40 (facing portion 42, for example) may be formed of magnets, and the first magnetic member 30 may be formed of a magnetic body (ferromagnetic material or soft magnetic material). With this configuration as well, the first magnetic member 30 is attracted to the second magnetic member 40 by a magnetic force, making it possible to bias the down button 20 toward the initial position illustrated in Fig. 6A.

Further, two or more of the attached portion 22 (facing portion 22c, for example) of the down button 20, the first magnetic member 30, and the second magnetic member 40 (facing portion 42, for example) may be formed of magnets (hard magnetic materials, for example), or all of these elements may be formed of magnets. With this configuration as well, the first magnetic member 30 is attracted to the second magnetic member 40 by a magnetic force, making it possible to bias the down button 20 toward the initial position.

Further, in the embodiment, a structure is described in which the support member 50 and the two shaft members 60 are formed separately and the two shaft members 60 are attached to the support member 50. The structure is not limited thereto, and the shaft members 60 may be formed integrally with the support member 50. Further, the shaft members 60 may be formed of the same material as that of the support member 50. In a case in which the support member 50 and the shaft members 60 are formed separately, the axis Ax1 may be defined by one shaft member. In this case, a hole through which one shaft member passes may be formed in the support member 50.

### 4. Summary

(1) As described above, the input device described in the present disclosure may include a housing and an operated member. The operated member may include an operated portion exposed from the housing and a magnetic portion formed of a magnetic material and accommodated in the housing. Further, the input device may include a first magnetic member accommodated in the housing, formed of a magnetic material, and configured to attach the operated member to the input device by a magnetic force between the first magnetic member and the magnetic portion and a second magnetic member accommodated in the housing and formed of a magnetic material. The operated member, in a state of being attached to the input device, may be configured to be movable from an initial position together with the first magnetic member in response to an operation by a user and detachable from the input device by an operation from outside the housing. The second magnetic member may bias the operated member toward the initial position by attracting the first magnetic member. According to this configuration, it is possible to bias the operated member toward the initial position without using an elastic member.
(2) In the input device according to (1), the first magnetic member may be a magnet having a first magnetic pole and a second magnetic pole, the first magnetic pole being one of an S pole and an N pole, and the second magnetic pole being the other of the S pole and the N pole. The magnetic portion may be a magnetic body different from a magnet and face the first magnetic pole. The second magnetic member may be a magnetic body different from a magnet and include a portion facing the second magnetic pole.
(3) The input device according to (1) or (2) may further include a support member accommodated in the housing and configured to support the operated member with the operated member attached to the support member. The support member may be configured to be movable about an axis. The first magnetic member may be attached to the support member away from the axis in a first direction intersecting the axis. The second magnetic member may attract the first magnetic member in a second direction intersecting the axis and the first direction.
(4) In the input device according to (3), the second magnetic member may include a facing portion facing the first magnetic member and configured to attract the first magnetic member in the second direction. A central position of the facing portion may be shifted from a central position of the first magnetic member in the second direction.
(5) The input device according to (3) or (4) may further include a sensor accommodated in the housing and configured to output a signal in accordance with whether the sensor is pressed by the support member. The support member may further include a contact portion separated from the axis on one side in the first direction and configured to come into contact with the sensor. The sensor may be located on one side of the contact portion in the second direction. The first magnetic member may be separated from the axis on the other side in the first direction. The second magnetic member may attract the first magnetic member toward the other side in the second direction.
(6) In the input device according to (5), the contact portion may be configured to come into contact with the sensor in a state without external force being applied to the operated member. With this configuration, it is possible to more effectively suppress rattling of the support member and the operated member attached to the support member at the initial position. Further, when the user presses the operated member from the initial position in an operation direction, since the contact portion is in contact with the sensor, the contact portion can immediately press the sensor.
(7) In the input device according to any one of (3) to (6), the second magnetic member may include a facing portion facing the first magnetic member and having a first function of attracting the first magnetic member and a portion separated from the facing portion and having a second function different from the first function. With this configuration, it is possible to reduce the number of members accommodated in the housing as compared with a case in which the portion having the second function is provided in a member different from the second magnetic member.
(8) The input device according to any one of (3) to (7) may further include a shaft member configured to support the support member. The second magnetic member may include a portion configured to attract the first magnetic member and a portion covering the shaft member and configured to restrict movement of the shaft member. With this configuration, it is possible to reduce the number of members accommodated in the housing as compared with a case in which the portion restricting the movement of the shaft member is provided in a member different from the second magnetic member.
(9) The input device according to any one of (1) to (8) may further include a frame accommodated in the housing. The first magnetic member may be movable together with the operated member relative to the frame. The second magnetic member may be fixed to the frame.

## Claims

1. An input device comprising:
a housing;
an operated member including an operated portion exposed from the housing and a magnetic portion formed of a magnetic material and accommodated in the housing;
a first magnetic member accommodated in the housing, formed of a magnetic material, and configured to attach the operated member to the input device by a magnetic force between the first magnetic member and the magnetic portion; and
a second magnetic member accommodated in the housing and formed of a magnetic material,
wherein the operated member, in a state of being attached to the input device, is movable from an initial position together with the first magnetic member in response to an operation by a user and detachable from the input device by an operation from outside the housing, and
the second magnetic member biases the operated member toward the initial position by attracting the first magnetic member.

2. The input device according to claim 1,
wherein the first magnetic member is a magnet having a first magnetic pole and a second magnetic pole, the first magnetic pole being one of an S pole and an N pole, and the second magnetic pole being the other of the S pole and the N pole,
the magnetic portion is a magnetic body different from a magnet and faces the first magnetic pole, and
the second magnetic member is a magnetic body different from a magnet and includes a portion facing the second magnetic pole.

3. The input device according to claim 1, further comprising:
a support member accommodated in the housing and configured to support the operated member with the operated member attached to the support member,
wherein the support member is movable about an axis,
the first magnetic member is attached to the support member away from the axis in a first direction intersecting the axis, and
the second magnetic member attracts the first magnetic member in a second direction intersecting the axis and the first direction.

4. The input device according to claim 3,
wherein the second magnetic member includes a facing portion facing the first magnetic member and configured to attract the first magnetic member in the second direction, and
a central position of the facing portion is shifted from a central position of the first magnetic member in the second direction.

5. The input device according to claim 3, further comprising:
a sensor accommodated in the housing and configured to output a signal in accordance with whether the sensor is pressed by the support member,
wherein the support member further includes a contact portion separated from the axis on one side in the first direction and configured to come into contact with the sensor,
the sensor is located on one side of the contact portion in the second direction,
the first magnetic member is separated from the axis on the other side in the first direction, and
the second magnetic member attracts the first magnetic member toward the other side in the second direction.

6. The input device according to claim 5,
wherein the contact portion is configured to come into contact with the sensor in a state without external force being applied to the operated member.

7. The input device according to claim 3,
wherein the second magnetic member includes a facing portion facing the first magnetic member and having a first function of attracting the first magnetic member and a portion separated from the facing portion and having a second function different from the first function.

8. The input device according to claim 3, further comprising:
a shaft member configured to support the support member,
wherein the second magnetic member includes a portion configured to attract the first magnetic member and a portion covering the shaft member and configured to restrict movement of the shaft member.

9. The input device according to claim 1, further comprising:
a frame accommodated in the housing,
wherein the first magnetic member is movable together with the operated member relative to the frame, and
the second magnetic member is fixed to the frame.
